# EUROPÄISCHE PATENTSCHRIFT

(11) **EP 1 100 629 B1**
(45) Veröffentlichungstag und Bekanntmachung des Hinweises auf die Patenterteilung: **17.07.2002**
(21) Anmeldenummer: 99952265.9
(22) Anmeldetag: 02.08.1999
(51) Int. Cl.: B07C 1/02

(54) **VORRICHTUNG ZUM ENTLEEREN VON SENDUNGSBEHÄLTERN**
METHOD FOR EMPTYING PARCEL CONTAINERS
DISPOSITIF PERMETTANT DE VIDER DES CONTENEURS DE PLIS

(30) Priorität: 04.08.1998 DE 19835233
(43) Veröffentlichungstag der Anmeldung: 23.05.2001
(73) Patentinhaber: SIEMENS AKTIENGESELLSCHAFT, 80333 München (DE)
(72) Erfinder: ENENKEL, Peter, D-78465 Konstanz (DE)
(86) Internationale Anmeldenummer: DE9902407
(87) Internationale Veröffentlichungsnummer: WO0007745

(56) Entgegenhaltungen:
- DE-A- 2 063 303
- FR-A- 2 646 620
- US-A- 4 005 792

## Beschreibung

Die Erfindung betrifft eine Vorrichtung zum Entleeren von rechteckigen, oben offenen Sendungsbehältern.
Beim Sortieren von flachen Sendungen in Sortieranlagen werden entsprechende Sendungsbehälter verwendet. Zum einen werden in die Sortieranlagen Sendungsbehälter eingesetzt, in die das Paket direkt sortiert wird und die nach dem Sortierlauf manuell oder automatisch entnommen werden. Zum anderen werden die Sendungen in feststehende Fächer sortiert, aus denen die Sendungen manuell oder automatisch entnommen und in Sendungsbehälter umgeladen werden. In diesen Behältern werden die Sendungen zwischengespeichert und nachfolgenden Bearbeitungsschritten zugeführt. Dies kann sowohl ein zweiter Sortiergang auf der gleichen Sortieranlage, z.B. für eine Gangfolgesortierung, als auch eine weitere Sortierung auf einer anderen Sortieranlage sein.
Zum Entleeren der mit Sendungen gefüllten Behälter wurden bisher folgende Lösungen bekannt:
1. Kippen eines Behälters um 180° auf eine Ladefläche (Auskippen des Behälters)
   In der DE 195 45 716 C1 wird der Behälter mit den stehend gelagerten Sendungen automatisch auf eine Zuführstrecke zu einer Vereinzelung zwischen zwei verfahr- und schwenkbare Trennmesser geschwenkt.
   Diese Lösung ist aufwendig, die Sendungen werden bei dem Schwenkvorgang stark beansprucht und die Gewährleistung der Stapelqualität ist nicht gesichert.
2. Öffnen einer Seitenwand oder des Bodens der Behälter und Entleeren durch Herausfallen oder Herausschieben der Sendungen
3. Herausschieben eines zusätzlichen Behälterbodens

Bei diesen beiden Lösungsvarianten sind ebenfalls aufwendige kinematische Zusatzeinrichtungen zum Heben und Senken der Sendungen bzw. zum Öffnen und Schließen von Behälterboden und/oder Seitenwänden notwendig. Dabei können auch Orientierungsfehler der Sendungen entstehen.

Aus der US 4 005 792 ist eine Lösung bekannt, bei der die

Sendungsbehälter im Boden durchgehende Aussparungen aufweisen, in die Stützfinger unter den Sendungen eintauchen können. Mittels aufwendiger Mechanik werden dann die Stützfinger und Behälter in zwei Ebenen so verfahren, daß die Sendungen auf ein Zuführbett einer Stoffeingabe geschoben werden.

Der in Anspruch 1 dargelegten Erfindung liegt deshalb die Aufgabe zugrunde, eine funktionssichere Vorrichtung zum Entleeren von Sendungsbehältern zu schaffen, bei welcher die

Orientierung und Qualität der Stapel erhalten bleibt und die notwendigen kinematischen Bewegungsabläufe auf ein Minimum reduziert sind. Die Kombination der Mittel Stützfinger, Ausnehmungen im Behälterboden, seitliche Führungselemente an den Sendungsbehältern und Führungsbahnen mit Öffnungen für die Führungselemente im Bereich der Stützfinger bewirkt, daß beim Verschieben der Sendungsbehälter die Sendungen auf den Stützfingern verbleiben, während sich die Sendungsbehälter nach unten bewegen. Die Sendungen werden also nicht aus dem SEndungsbehälter genommen oder durch Veränderung der Lageorientierung aus dem Sendungsbehälter entfernt, sondern sie verbleiben in ihrer Lage und der Sendungsbehälter wird mit geringem Aufwand entfernt.
Vorteilhafte Ausgestaltungen der Erfindung sind in den Unteransprüchen dargestellt.

Nach Anspruch 2 ist es günstig, die Sendungsbehälter bei der Abwärtsbewegung zu führen, um z.B. ein sicheres Stapeln dieser leeren Sendungsbehälter zu gewährleisten.
Gemäß Anspruch 3 gelangen die leeren Sendungsbehälter vorteilhaft auf eine Fördereinrichtung, z.B. ein Förderband, zum Abtransport an eine Behältersammelstelle.

Werden die Sendungen im Sendungsbehälter entsprechend Anspruch 4 liegend transportiert, so ist es nach Anspruch 5 vorteilhaft, die Stützfinger mit angetriebenen schmalen Transportbändern auszugestalten, so daß die Sendungen über die Stützfinger hinaus zu weiteren Transportmitteln oder Arbeitsstationen transportiert werden.
Sind hingegen die Sendungen auf einer Schmalseite quer zur Verschiebeeinrichtung stehend nach Anspruch 6 im Sendungsbehälter gestapelt, so wird in einer vorteilhaften Ausgestaltung gemäß Anspruch 7 der Sendungsstapel durch kraftadaptive Stützen durch die Ausnehmungen in den Behälterwänden hindurch gehalten und nach der Abwärtsbewegung des Sendungsbehälters weiter verschoben. Auch hier bleibt der Sendungsstapel hinsichtlich der Orientierung und Stapelqualität während des Entladens erhalten.

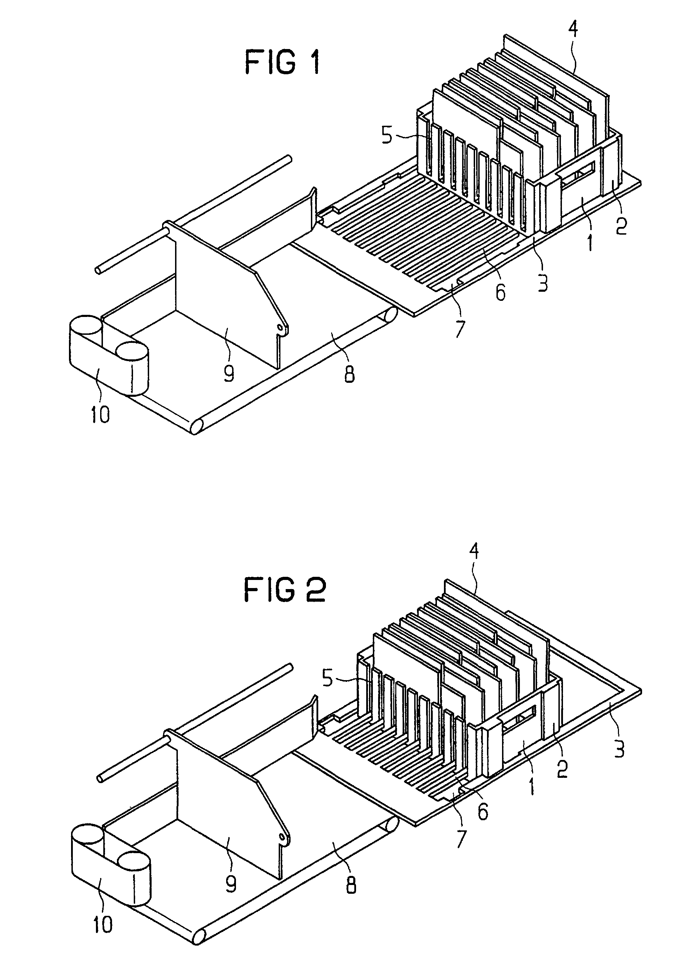

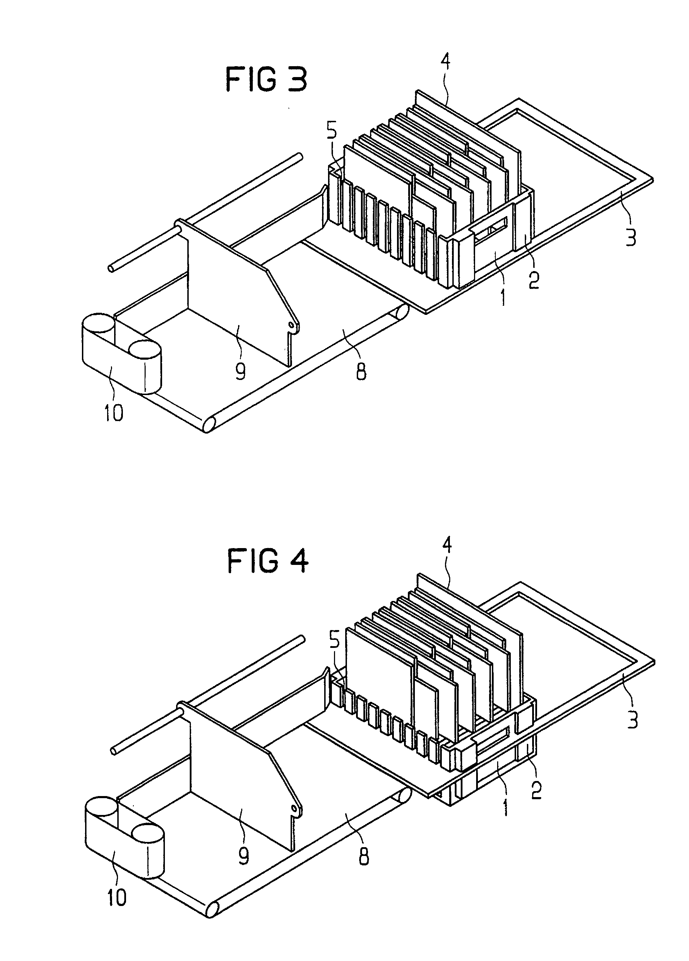

Durch die Reduzierung der Anzahl der notwendigen kinematischen Bewegungsabläufe auf ein Minimum ist also eine halb- oder vollautomatische Entleerung einfach realisierbar. Bei manueller Bedienung der Vorrichtung hält der Operateur den Stapel und schiebt ihn und somit auch den Sendungsbehälter entlang den Führungsbahnen zu einer Übernahmestelle für eine weitere Bearbeitung über den Stützfingern wird der Sendungsbehälter durch seine Schwerkraft nach unten bewegt, d.h. es ist keinerlei Kinematik oder Energiezufuhr notwendig.
Durch die Bewegung der Sendungsbehälter aus dem Prozeßraum nach unten ist eine voll- oder halbautomatische Abfuhr der Sendungsbehälter ebenfalls einfach realisierbar.
Die Entleerung insgesamt erfolgt sehr funktionssicher. Anschließend wird die Erfindung anhand der Zeichnung in einem Ausführungsbeispiel näher erläutert. Dabei zeigen
- FIG 1 bis 7: Perspektive schematische Darstellungen der Verschiebung eines gefüllten Sendungsbehälters, der Entleerung und der Zuführung des Sendungsstapels zu einer Vereinzelungseinrichtung in verschiedenen Phasen

Hierbei sind die Verschiebelemente nicht näher dargestellt. Die Verschiebung kann dabei manuell erfolgen, indem der Operateur den Sendungsstapel beidseitig mit den Händen erfaßt und diesen mit dem Sendungsbehälter 1 in Richtung Vereinzelung verschiebt, oder auch wie noch beschrieben automatisch erfolgen.

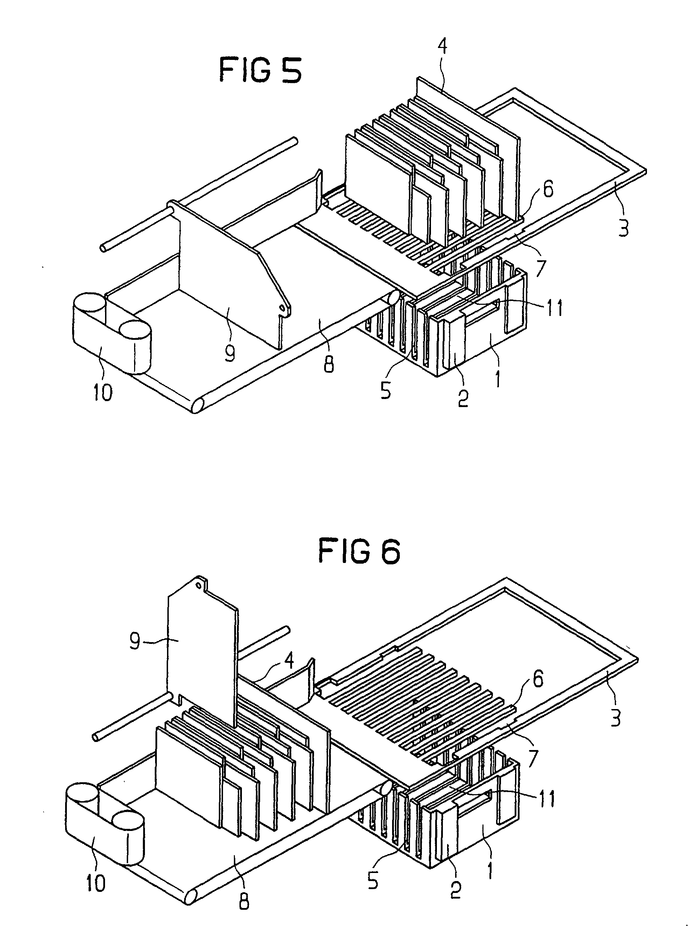

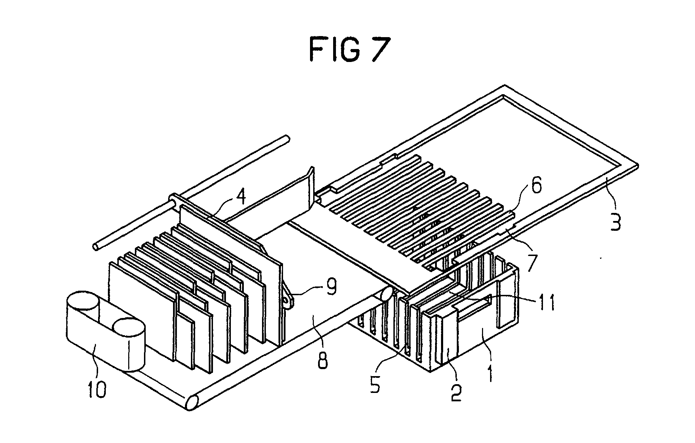

Der oben offene, rechteckige Sendungsbehälter 1, der mit quer zur Verschieberichtung stehenden Sendungen 4 beladen ist, besitzt einen Boden mit durchgehenden, in Verschieberichtung verlaufenden Aussparungen 11. Die in Verschieberichtung vorderen und hinteren Seitenwände weisen über den Aussparungen 11 nach oben hin offene Ausnehmungen 5 auf. Seitlich am Sendungsbehälter 1 sind Führungselemente 2 angeordnet, mit denen die Sendungsbehälter 1 auf seitlichen Führungsbahnen 3 verschoben werden. Wie in den FIG 1 und 2 dargestellt, gelangt der Behälter 1 mit den Sendungen 4, die zur hinteren Seitenwand hin ausgerichtet sind, in einen Bereich mit Stützfingern 6. Die Stützfinger 6 sind so dimensioniert und in solcher Höhe angebracht, daß sie beim Verschieben des Sendungsbehälters 1 in die Aussparungen 11 unter die Sendungen 4 eintauchen. Befinden sich die Sendungen 1 auf den Stützfingern 6 und die seitlichen Stützelemente erreichen die Öffnungen 7 für die Stützelemente 6 (FIG 3), so fällt der Sendungsbehälter 1 durch seine Schwerkraft nach unten (FIG 4 und 5). Da er sich dann unterhalb der Sendungstransportebene befindet, kann er von dort bequem mit einem nicht dargestellten Transportmittel abtransportiert werden.
Über die Stützfinger 6 wird der Sendungsstapel dann auf die Stoffeingabe einer Sortiermaschine geschoben. Diese besitzt ein Zuführbett und eine Abzugseinrichtung, in diesem Fall ein über zwei Rollen geführter und im Start-Stop-Betrieb angetriebener Abzugsriemen 10 mit hohem Reibkoeffizienten, der die jeweils vorderste Sendung erfaßt.
Das Zuführbett besteht aus einem angetriebenen Unterflurband 8, auf dem die Sendungen 4 stehen und einem schwenkbaren, ebenfalls angetriebenen Trennmesser 9. Der Sendungsstapel wird vom Operateur möglichst weit an die Abzugsriemen 10 geschoben, und das Trennmesser 9 wird hinter dem Sendungsstapel eingeschwenkt, so daß der Stapel nicht umkippen kann (FIG 6 und 7).
Trennmesser 9 und Unterflurband 8 werden dann während der Stapelvereinzelung stapeldruckgesteuert in Richtung Abzugsband 10 bewegt.

Neben der beschriebenen halbautomatischen Entleerung ist auch eine vollautomatische Entleerung möglich. Dabei fördert ein automatisches Transportsystem eine gefüllten Sendungsbehälter 1 auf die Förderbahnen 3 und verschiebt den Sendungsbehälter in Richtung Stoffeingabe. An der Übergabeposition über den Stützfingern 6 greifen zwei kraftadaptive Stützen, in diesem Fall zwei ebenfalls schwenkbare Trennmesser von beiden Seiten den Sendungsstapel. Dabei wird ein bestimmter Greifdruck eingehalten. Nachdem der Sendungsbehälter 1 sich nach unten bewegt hat, schieben die beiden Trennmesser den Sendungsstapel in Richtung Abzugsstelle, wo evtl. noch ein Stapel bzw. Teilstapel, gehalten durch ein weiteres Trennmesser, steht. Die Übergabe und Vereinigung zu einem Gesamtstapel ist beispielsweise in der DE 195 45 716 C1 erläutert. Werden die Sendungen 4 im Behälter liegend transportiert, so ist es vorteilhaft, die Stützfinger 6 mit schmalen angetriebenen Transportbändern zu versehen, so daß die liegenden Sendungen automatisch weitertransportiert werden können.

## Patentansprüche

1. Vorrichtung mit rechteckigen, oben offenen Sendungsbehältern, die im Boden durchgehende, in Verschieberichtung verlaufende Ausparungen (11) aufweisen und mit entgegen der Verschieberichtung ausgerichteten, schmalen frei auskragenden Stützfingern (6), wobei die Stützfinger und die Aussparungen so dimensioniert und positioniert sind, daß die Stützfinger in die Aussparungen unter den Sendungen eintauchbar sind,
**dadurch gekennzeichnet, daß**
- die Sendungsbehälter (1) seitliche Führungselemente (2) besitzen und damit auf seitlichen Führungsbahnen (3) führbar und verschiebbar sind,
- die zwischen den Führungsbahnen (3) befindlichen Stützfinger (6) länger als die Sendungsbehälter (1) in Verschieberichtung sind,
- die in Verschieberichtung vorderen und hinteren Seitenwände des Sendungsbehälters (1) mindestens über den Stützfingern (6) nach oben hin offene Ausnehmungen (5) besitzen,
- die Führungsbahnen (3) im Bereich der Stützfinger (6) Öffnungen (7) für die Führungselemente (2) der Sendungsbehälter (1) aufweisen, die so dimensioniert und positioniert sind, daß während des Verschiebens des Sendungsbehälters (1) die Führungselemente (2) in die Öffnungen (7) eintauchen, der Sendungsbehälter (1) sich um 90° zur Verschieberichtung nach unten bewegt und die Sendungen (4) auf den Stützfingern (6) verbleiben, so daß die Sendungsbehälter entleert werden.

2. Vorrichtung nach Anspruch 1, **dadurch gekennzeichnet, daß** Elemente zur Führung der Sendungsbehälter (1) bei der Abwärtsbewegung vorgesehen sind.

3. Vorrichtung nach einem der Ansprüche 1 oder 2, **dadurch gekennzeichnet, daß** die leeren Sendungsbehälter (1) auf eine Fördereinrichtung zum Abtransport an eine Behältersammelstelle gelangen.

4. Vorrichtung nach Anspruch 1, **dadurch gekennzeichnet, daß** sich die Sendungen liegend im Sendungsbehälter (1) befinden.

5. Vorrichtung nach Anspruch 4, **dadurch gekennzeichnet, daß** die Stützfinger (6) angetriebene Transportbänder für den Weitertransport der Sendungen aufweisen.

6. Vorrichtung nach Anspruch 1, **dadurch gekennzeichnet, daß** die Sendungen (4) auf einer Schmalseite quer zur Verschieberichtung stehend in den Sendungsbehältern (1) transportiert werden.

7. Vorrichtung nach Anspruch 6, **dadurch gekennzeichnet, daß** der Sendungsstapel durch kraftadaptive Stützen gehalten und nach der Abwärtsbewegung des Sendungsbehälters weiter verschoben wird.

## Claims

1. Apparatus having rectangular mail containers which are open at the top, which in the base have continuous cutouts (11) running in the displacement direction and having narrow, freely projecting supporting fingers (6) which are aligned in the direction opposite to the displacement direction, the supporting fingers and the cutouts being dimensioned and positioned in such a way that the supporting fingers can be inserted into the cutouts, underneath the items of mail,
**characterized in that**
- the mail containers (1) have lateral guide elements (2) and can therefore be guided and displaced on lateral guide tracks (3),
- the supporting fingers (6) located between the guide tracks (3) are longer than the mail containers (1) in the displacement direction,
- the side walls of the mail container (1) which are at the front and rear in the displacement direction have, at least above the supporting fingers (6), recesses (5) that are open at the top,
- in the region of the supporting fingers (6), the guide tracks (3) have openings (7) for the guide elements (2) of the mail containers (1), the said openings being dimensioned and positioned in such a way that during the displacement of the mail container (1) the guide elements (2) penetrate into the openings (7), the mail container (1) moves downwards at 90° to the displacement direction and the items of mail (4) remain on the supporting fingers (6), so that the mail containers are emptied.

2. Apparatus according to Claim 1, **characterized in that** elements are provided for guiding the mail containers (1) during the downward movement.

3. Apparatus according to either of Claims 1 and 2, **characterized in that** the empty mail containers (1) pass onto a conveying device to be transported away to a container collecting point.

4. Apparatus according to Claim 1, **characterized in that** the items of mail are horizontal in the mail container (1).

5. Apparatus according to Claim 4, **characterized in that** the supporting fingers (6) have driven transport belts for the onward transport of the items of mail.

6. Apparatus according to Claim 1, **characterized in that** the items of mail (4) are transported in the mail containers (1) such that they stand on a narrow stand transverse to the displacement direction.

7. Apparatus according to Claim 6, **characterized in that** the stack of mail is held by means of adaptive-force supports and is displaced further after the downward movement of the mail container.

## Revendications

1. Dispositif comportant des conteneurs d'envois rectangulaires et ouverts vers le haut, qui présentent des évidements traversants (11) s'étendant dans la direction de déplacement, et des doigts de soutien (6) étroits, orientés à l'encontre de la direction de déplacement et dépassant librement, les doigts de soutien et les évidements étant dimensionnés et positionnés de telle sorte que les doigts de soutien peuvent pénétrer dans les évidements sous les envois, **caractérisé par le fait que**
- les conteneurs d'envois (1) ont des éléments de guidage latéraux (2) et peuvent donc être guidés et déplacés sur des guides latéraux (3),
- les doigts de soutien (6) se trouvant entre les guides (3) sont plus longs que les conteneurs d'envois (1) dans la direction de déplacement,
- les parois latérales avant et arrière, dans la direction de transport, du conteneur d'envois (1) ont au moins des évidements (5) ouverts vers le haut au-dessus des doigts de soutien (6),
- les guides (3) dans la zone des doigts de soutien (6) comportent des ouvertures (7) pour les éléments de guidage (2) des conteneurs d'envois (1), lesquelles ouvertures sont dimensionnées et positionnées de telle sorte que, pendant le déplacement du conteneur d'envois (1), les éléments de guidage (2) pénètrent dans les ouvertures (7), le conteneur d'envois (1) se déplace vers le bas selon une direction tournée de 90° par rapport à la direction de transport et les envois (4) restent sur les doigts de soutien (6) de telle sorte que les conteneurs d'envois sont vidés.

2. Dispositif selon la revendication 1, **caractérisé par le fait que** des éléments sont prévus pour le guidage des conteneurs d'envois (1) lors du mouvement descendant.

3. Dispositif selon l'une des revendications 1 ou 2, **caractérisé par le fait que** les conteneurs d'envois (1) vides arrivent sur un dispositif de transport pour être évacués vers un point de collecte de conteneurs.

4. Dispositif selon la revendication 1, **caractérisé par le fait que** les envois se trouvent couchés dans le conteneur d'envois (1).

5. Dispositif selon la revendication 4, **caractérisé par le fait que** les doigts de soutien (6) comportent des bandes transporteuses entraînées pour transporter plus loin les envois.

6. Dispositif selon la revendication 1, **caractérisé par le fait que** les envois (4) dans les conteneurs d'envois (1) sont transportés debout sur un côté étroit transversalement par rapport à la direction de transport.

7. Dispositif selon la revendication 6, **caractérisé par le fait que** la pile d'envois est tenue par des soutiens adaptés aux forces et est poussée plus loin après le mouvement descendant du conteneur d'envois.
